Europäisches Patentamt

European Patent Office

Office européen des brevets

(11) Veröffentlichungsnummer: **0 393 375 B1**

(19)

(12) **EUROPÄISCHE PATENTSCHRIFT**

(45) Veröffentlichungstag der Patentschrift: **01.06.94**

(51) Int. Cl.5: **B60T 8/32**

(21) Anmeldenummer: **90105486.6**

(22) Anmeldetag: **23.03.90**

(54) **Verfahren zur Bestimmung des Radschlupfes einzelner Räder eines Fahrzeuges.**

(30) Priorität: **17.04.89 DE 3912555**

(43) Veröffentlichungstag der Anmeldung:
**24.10.90 Patentblatt 90/43**

(45) Bekanntmachung des Hinweises auf die
Patenterteilung:
**01.06.94 Patentblatt 94/22**

(84) Benannte Vertragsstaaten:
**FR GB IT NL SE**

(56) Entgegenhaltungen:
**EP-A- 0 201 843**
**DE-A- 3 618 691**
**DE-B- 2 334 235**
**DE-C- 3 639 416**

(73) Patentinhaber: **DAIMLER-BENZ AKTIENGE-
SELLSCHAFT**
**Mercedesstrasse 136**
**D-70327 Stuttgart(DE)**

(72) Erfinder: **Bader, Christian, Dr.**
**Altingerstrasse 21**
**D-7030 Böblingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 393 375 B1

**Beschreibung**

Die Erfindung betrifft ein Verfahren zur Bestimmung des Radschlupfes einzelner Räder eines Fahrzeuges gemäß dem Oberbegriff des Patentanspruches 1.

Es ist bereits ein gattungsgemäßes Verfahren bekannt (DE 23 34 235 B2), wonach der Schlupf eines Rades bestimmt wird, indem die Drehzahl dieses Rades beim Bremsen gemessen und mit der Drehzahl eines ungebremst laufenden Bezugsrades verglichen wird. Dieses Bezugsrad ist eines der Hinterräder. Die Bremskraft auf eines dieser Hinterräder wird zyklisch unterbrochen, wobei die Zeitabstände zwischen diesen Unterbrechungen von der Fahrzeuggeschwindigkeit und der wirkenden Bremskraft abhängen. Der Schlupf der einzelnen Räder des Fahrzeugs wird aus der Drehzahl des entsprechenden gebremsten Rades und der Drehzahl des jeweils ungebremsten Hinterrades bestimmt.

Bei diesem Verfahren ergeben sich jedoch Ungenauigkeiten bei der Bestimmung des Schlupfes der einzelnen Räder dadurch, daß eine mögliche Differenz der Radien des entsprechenden Rades zu dem jeweiligen Bezugsrad unberücksichtigt bleibt. Außerdem entsteht ein Fehler bei der Bestimmung des Schlupfes bei einer Kurvenfahrt dadurch, daß der Radius der zu durchfahrenden Kurve i.a. für jedes Rad unterschiedlich ist. Dadurch haben die Räder jeweils unterschiedliche Drehgeschwindigkeiten beim Durchfahren der Kurve im ungebremsten Zustand. Bei einer präzisen Bestimmung des Schlupfes der einzelnen Räder durch Verwendung eines Rades als Bezugsrad müßte somit eine Kurvenfahrt gesondert berücksichtigt werden.

Aufgabe der Erfindung ist es, das bekannte Verfahren so zu verbessern, daß der Schlupf $\sigma$ der einzelnen Räder eines Fahrzeuges im stabilen Bremsbereich präzise bestimmt werden kann, ohne daß das Fahrzeug durch die Bestimmung des Schlupfes beim Bremsen in einen instabilen Fahrzustand gerät.

Diese Aufgabe wird bei einem gattungsgemäßen Verfahren zur Bestimmung des Schlupfes der einzelnen Räder eines Fahrzeuges erfindungsgemäß mit den kennzeichnenden Merkmalen des Anspruchs 1 gelöst, wobei die Merkmale der Unteransprüche vorteilhafte Aus- und Weiterbildungen kennzeichnen.

In vorteilhafter Weise kann der präzise bestimmte Radschlupf verwendet werden, um
- die Bremskraftbeiwerte der einzelnen Räder zu bestimmen,
- eine bestimmte Kraftschlußausnutzung bei unterschiedlichen Haftungen der einzelnen Räder mit der Fahrbahnoberfläche zu erreichen,
- bei einer Kurvenfahrt beim Bremsen eine bestimmte Lenkcharakteristik einzustellen und/oder
- eine gleichmäßige Abnutzung der Bremsbeläge zu erreichen.

Der Schlupf $\sigma$ eines Rades ergibt sich aus der Drehzahl des frei laufenden Rades $n_f$ und der Drehzahl des gebremsten Rades $n_b$ zu:

$$\sigma = \frac{n_f - n_b}{n_f} = 1 - \frac{n_b}{n_f}$$

Außerdem ist der grundsätzliche Verlauf der Kennlinie des Bremskraftbeiwertes eines Rades mit der Fahrbahnoberfläche $\mu$ über dem Radschlupf $\sigma$ bekannt.

Die Bremskraft eines einzelnen Rades $F_b$ ergibt sich aus dem Produkt des Bremskraftbeiwertes $\mu$ mit der auf das Rad wirkenden Gewichtskraft $N_g$. Die insgesamt auf das Fahrzeug wirkende Bremskraft $F_B$ ergibt sich durch die Summation der Bremskräfte $F_b$ der einzelnen Räder.

Unter Verwendung einer Kombination von einem oder mehreren geeigneter Sensoren wie z.B. einem Sensor zur Messung des Bremsdruckes der einzelnen Räder zur Bestimmung der Bremskraft $F_b$, einem Verzögerungssensor und einem Sensor zur Messung des Gesamtgewichtes des Fahrzeuges zur Bestimmung der Bremskraft $F_B$ und/oder einem Querbeschleunigungssensor läßt sich somit durch die präzise Bestimmung des Radschlupfes ein bestimmtes Fahrverhalten beim Bremsen durch eine geeignete Bremsdruckverteilung erzielen und/oder es ist eine Diagnose des Zustandes der Räder möglich. Die Verwendung weiterer geeigneter Sensoren wird im folgenden ggf. näher ausgeführt.

Der Schlupf der einzelnen Räder wird präzise dadurch gemessen, daß während eines Bremsvorganges im stabilen Bremsbereich der auf die einzelnen Räder wirkende Bremsdruck zeitlich so unterbrochen wird, daß sich das entsprechende Rad mit der Drehzahl eines frei laufenden Rades dreht. Die Länge des Zeitraumes, während der der Bremsdruck von dem Rad weggenommen wird, beträgt ca. 0,1 s. Am Ende dieses Zeitraumes wird somit die Drehzahl des frei laufenden Rades gemessen. Ein verbessertes Verfahren

2

zur Erkennung des Zustandes des frei laufenden Rades ergibt sich, indem die Raddrehbeschleunigung mit einem vorgegebenen Schwellwert verglichen wird. Der Zustand des frei laufenden Rades wird dabei erkannt, wenn die Raddrehbeschleunigung unter einen vorgegebenen Schwellwert gefallen ist. Anschließend wird die Bremskraft wieder beaufschlagt und es wird im stationären Zustand der Raddrehzahl bei beaufschlagter Bremskraft die Drehzahl des gebremsten Rades gemessen. Dieser stationäre Zustand kann festgestellt werden, indem die Raddrehverzögerung bestimmt und mit einem vorgegeben Schwellwert verglichen wird. Der stationäre Zustand ist erreicht, wenn die Raddrehverzögerung unter diesen vorgegeben Schwellwert abgefallen ist. Aus diesen beiden Werten der Raddrehzahl des frei laufenden und des gebremsten Rades wird somit der Radschlupf bestimmt. Da während eines Bremsvorganges eine ausreichende Menge von Meßwerten zur Verfügung stehen muß, wird dieser Vorgang der Wegnahme des Bremsdruckes auf jedes Rad in einem zeitlichen Abstand von einigen zehntel Sekunden wiederholt. Um zu verhindern, daß durch diese getaktete zeitliche Unterbrechung des Bremsdruckes Eigenschwingungen des Fahrzeuges angeregt werden, werden die Zeitintervalle zwischen den einzelnen Unterbrechungen des Bremsdruckes variiert. Außerdem kann vorgesehen sein, den Bremsdruck bei allen Rädern einer Achse gleichzeitig zu reduzieren, um das Auftreten von unerwünschten Giermomenten um die Fahrzeughochachse zu vermeiden.

Durch diese zeitabhängige Unterbrechung des Bremsdruckes würde an sich der Bremsweg des Fahrzeuges verlängert werden im Vergleich zu einem Fahrzeug, bei dem keine zeitabhängige Unterbrechung des Bremsdruckes durchgeführt wird. Damit sich jedoch das für den Fahrzeugführer spürbare Bremsverhalten des Fahrzeuges nicht ändert - d.h. insbesondere, daß mögliche Überreaktionen des Fahrzeugführers ausgeschlossen sein sollen - ist weiters vorgesehen, aus der Stellung des Bremswertgebers der Bremsanlage einen Sollwert für die Stärke des Bremsvorganges zu ermitteln. Ggf. geht in die Bestimmung des Sollwertes als zusätzlicher Parameter die Fahrzeuggeschwindigkeit ein. Wird von der Steuervorrichtung während eines Bremsvorganges der Bremsdruck zeitabhängig unterbrochen, so wird der Bremsdruck aufgrund des ermittelten Sollwertes bei Wiederbeaufschlagung auf einen höheren Wert gebracht als dem Wert des Bremsdruckes entspricht, wenn keine zeitabhängige Unterbrechung des Bremsdruckes durchgeführt wird. Der einzustellende höhere Wert des Bremsdruckes wird dabei so gewählt, daß der zeitliche Mittelwert der Bremskraft im Falle der zeitabhängigen Unterbrechung der Bremskraft gleich dem zeitlichen Mittelwert der Bremskraft wird, der sich bei kontinuierlicher Beaufschlagung mit dem Bremsdruck ergibt.

Der stabile Bremsbereich wird bei einem Fahrzeug ohne Anti-Blockier-System (ABS) dadurch erkannt, daß ein geringer Sollwert für die Stärke des Bremsvorganges von dem Fahrzeugführer vorgegeben wird. Kommt es dabei wegen eines geringen $\mu$-Wertes trotzdem zu einem Blockieren des Räder, schadet die zeitabhängige Unterbrechung der Bremskraft nicht, da dadurch die Bremskraft so unterbrochen wird, daß die Räder des Fahrzeuges wieder anlaufen, d.h. näher an den stabilen Bremsbereich gelangen. Außerdem kann der stabile Bremsbereich dadurch erkannt werden, daß die Radverzögerung unter einem geeignet vorzugebenden Schwellwert bleibt. Um eine hinreichende Reserve bzgl. der Stabilität des Bremsvorganges zu haben, wird dieser Schwellwert der Radverzögerung vorzugsweise so gewählt, daß er unter der Ansprechschwelle eines möglicherweise vorhandenen ABS liegt. Bei einem Fahrzeug mit ABS kann das Verlassen des Bereiches des stabilen Bremsvorganges zusätzlich erkannt werden, indem Ansteuersignale von dem ABS zu den druckabsenkenden Bauteilen der Bremsanlage vorhanden sind. Grundsätzlich ist auch eine Kombination dieser Kriterien möglich, um das Verlassen des stabilen Bremsbereiches zu erkennen. Wenn das Verlassen des stabilen Bremsbereiches erkannt wurde, werden von der Steuervorrichtung keine weiteren Ausgangssignale ausgegeben.

Zunächst kann mittels dieses präzise bestimmten Radschlupfes der einzelnen Räder für jedes Rad der jeweilige Bremskraftbeiwert $\mu$ ermittelt werden, wenn der Beitrag $F_b$ jedes einzelnen Rades zur insgesamt wirkenden Bremskraft $F_B$ und außerdem die auf dieses Rad wirkende Gewichtskraft $N_g$ bekannt sind. Dieser Bremskraftbeiwert $\mu$ ergibt sich zu:

$$\mu = \frac{F_b}{N_g}$$

Der grundlegende Verlauf der $\mu/\sigma$ - Kennlinie ist bekannt. Diese Kennlinie variiert einerseits mit den Verhältnissen an der Straßenoberfläche wie z.B. Glatteis, regennasse Fahrbahn oder trockene Fahrbahn und andererseits mit den Eigenschaften des Rades wie z.B. Abnutzung, Luftdruck im Reifen und Eigenschaften des Reifenmaterials. Aus den eben angeführten Gründen ergibt sich somit eine Kennlinienschar für den Bremskraftbeiwert $\mu$ über dem Radschlupf $\sigma$. Der Parameter dieser Variation der Kennlinie wird im folgenden als Haftung des Rades mit der Fahrbahnoberfläche bezeichnet. Da nun für jedes Rad der Bremskraftbeiwert $\mu$ und der Radschlupf $\sigma$ einzeln bestimmt werden, ist es möglich, aus der Kennlinienschar für jedes Rad einzeln auf die grundsätzliche Haftung des Rades mit der Fahrbahnoberfläche zu schließen.

Der Beitrag $F_b$ eines einzelnen Rades zur insgesamt wirkenden Bremskraft $F_B$ kann bestimmt werden, indem die Kraft festgestellt wird, die von der Bremsanlage auf dieses Rad ausgeübt wird. Das kann durch unmittelbare Messung der Kraft an dem Bremssattel geschehen oder durch Messung des auf den Radbremszylinder wirkenden Druckes, der der Bremskraft $F_b$ in einer guten Näherung proportional ist. Außerdem kann die insgesamt wirkende Bremskraft $F_B$ bestimmt werden aus der Gesamtmasse M des Fahrzeuges und der Verzögerung a bei dem Bremsvorgang nach der Formel:

$$F_B = M * a .$$

Eine unter bestimmten Fahrbedingungen weniger genaue Bestimmung der Bremskraft $F_b$ ergibt sich unter der Annahme, daß sich das Fahrzeug in einem stabilen Bremsbereich befindet derart, daß alle Räder des Fahrzeuges denselben Beitrag $F_b$ zur resultierenden Bremskraft $F_B$ liefern. Die Berechnung der Größe $F_b$ erfolgt dann durch Division der Größe $F_B$ durch die Anzahl der Räder des Fahrzeuges. Bei diesem Verfahren zur Bestimmung der Bremskraft $F_b$ kann auf Sensoren verzichtet werden, die diese Bremskraft $F_b$ unmittelbar messen, allerdings ist hierbei die Bestimmung der Bremskraft $F_b$ mit größeren Ungenauigkeiten behaftet als bei einer unmittelbaren Bestimmung der Bremskraft $F_b$ durch geeignete Sensoren.

Ist die auf ein Rad wirkende Gewichtskraft $N_g$ bekannt, kann nach der oben angegebenen Formel der Bremskraftbeiwert $\mu$ bestimmt werden. Die auf ein Rad wirkende Gewichtskraft $N_g$ kann z.B. bestimmt werden durch Dehnungsmeßstreifen, die an den Achsen an geeigneten Stellen in an sich bekannter Weise angeordnet sind oder aber - bei luftgefederten Fahrzeugen - auch durch eine Messung des Druckes im Luftfederbalg.

Aus den ermittelten Werten der Haftung der einzelnen Räder mit der Fahrbahnoberfläche kann der Zustand der Räder und/oder die Beschaffenheit der Fahrbahnoberfläche ermittelt werden. Bei einer einfachen Form der Auswertung wird bei unterschiedlichen Werten der Haftung auf den beiden Fahrzeugseiten geschlossen, daß eine $\mu$-split Bedingung vorliegt. In diesem Fall muß die Haftung der Räder auf jeweils derselben Fahrzeugseite denselben Wert annehmen. Tritt der Fall ein, daß die Haftung zweier oder mehrerer Räder, die sich auf derselben Fahrzeugseite befinden, unterschiedlich ist, so ist zu erwarten, daß die Räder unterschiedliche Eigenschaften haben, d.h. daß eines der Räder einen Defekt aufweist. Wird über einen längeren Zeitraum festgestellt, daß die Haftung der Räder auf unterschiedlichen Fahrzeugseiten verschieden ist, so daß momentan betrachtet auf eine $\mu$-split Bedingung geschlossen wurde, wird ebenfalls ein Defekt von mindestens einem der Räder festgestellt. Unter dem Begriff "längerer Zeitraum" ist dabei zu verstehen, daß zumindest mehrere Bremsvorgänge während einer Strecke von mehreren Kilometern zu betrachten sind. Um Fehlschlüsse zu vermeiden, sollte sich dieser Zeitraum über mehrere Fahrten an mehreren Tagen erstrecken. Wird bei einem der Räder eine schlechtere Haftung mit der Fahrbahnoberfläche festgestellt, die auf das Rad zurückzuführen ist, wird dem Fahrzeugführer dieser Defekt des Rades mitgeteilt. Dies kann geschehen, indem der Defekt qualitativ angezeigt wird, ohne daß die Anzeige eine Information über die Stärke des Defektes beinhaltet, oder indem dem Fahrzeugführer ein Signal angezeigt wird, das eine Information über die Stärke des Defektes liefert. In einer einfachen Ausführungsform nimmt die Stärke des Signales proportional mit der Stärke des Defektes des Rades zu. Eine weitere zweckmäßige Ausführungsform besteht darin, daß die Stärke des Signales progressiv mit der Stärke des Defektes des Rades zunimmt. Dabei wird der Fahrzeugführer zunehmend deutlicher bei Erreichen eines gefährlichen Zustandes des Rades gewarnt.

Mit dem erfindungsgemäßen Verfahren kann bei Erkennen einer $\mu$-split Bedingung ein Bremsverhalten eingestellt werden vergleichbar der Methode der Giermomentabschwächung durch zeitlich verzögerten Druckaufbau bei einem ABS. Das ABS regelt erst bei Erreichen der für das System spezifischen Schwellwerte.

Unter Umständen ist es außerdem sinnvoll, die Lenkcharakteristik eines Fahrzeuges beim Durchfahren einer Kurve und einem gleichzeitigen Bremsvorgang zu beeinflussen. Dabei hängt es von der Eigendynamik des Fahrzeuges ab, ob die Lenkbewegung durch die Verteilung des Bremsdruckes unterstützt oder abgeschwächt werden soll. Der Zustand des Durchfahrens einer Kurve wird in an sich bekannter Weise durch einen Querbeschleunigungssensor und/oder einen Sensor zur Erkennung des Lenkradeinschlagwin-

EP 0 393 375 B1

kels in Verbindung mit einem Fahrgeschwindigkeitssensor erkannt. Die Verteilung der Bremskraft kann aus einem Kennlinienfeld bestimmt werden, in dem die Verteilung des Bremsdruckes in Abhängigkeit von einer oder mehreren der Größen Querbeschleunigung, μ-Wert, Fahrzeuggeschwindigkeit und Sollwert für die zu beaufschlagende Bremskraft abgelegt sind. Da bei einem Bremsvorgang die Seitenführungskraft der Räder mit zunehmender Bremskraft abnimmt, wird i.a. der Bremsdruck so verteilt werden, daß die Lenkbewegung des Fahrzeugs zunehmend stärker unterstützt wird mit einer Zunahme von einer oder mehreren der Größen Querbeschleunigung, Fahrzeuggeschwindigkeit und Sollwert für die zu beaufschlagende Bremskraft. Eine Abnahme des μ-Wertes bewirkt, daß das Fahrzeug "über die Räder schiebt". Bei einem geringer werdenden μ-Wert wird also die Verteilung des Bremsdruckes so erfolgen, daß die Lenkbewegung des Fahrzeugführers unterstützt wird, um ein besseres Spurhalten des Fahrzeuges zu ermöglichen.

Ein Ausführungsbeispiel der Erfindung ist in der Zeichnung schematisch dargestellt und wird im folgenden näher beschrieben. Es zeigen:

Fig. 1:  Eine Anordnung zur Bestimmung des Schlupfes der einzelnen Räder beim Bremsen und zur Ableitung sich daraus ergebender Werte,

Fig. 2:  Verlauf des Radschlupfes und der Bremskraft bei Unterbrechung des Bremsdruckes im Vergleich zu kontinuierlich beaufschlagtem Bremsdruck und

Fig. 3:  Kennlinienfeld zur Darstellung des Bremskraftbeiwertes μ über dem Radschlupf σ in Abhängigkeit verschiedener Haftreibungsbedingungen.

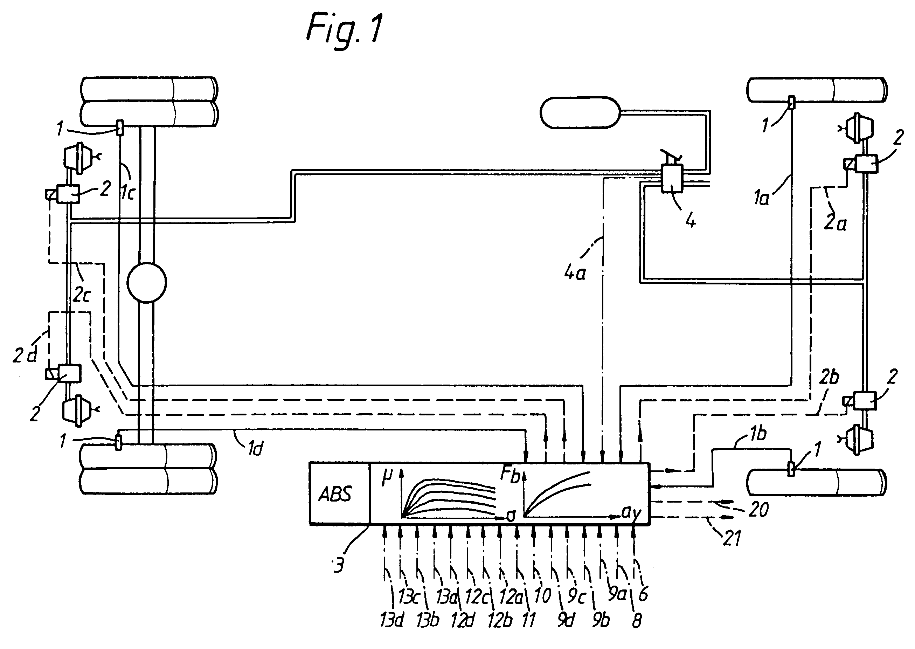

Wie aus Fig. 1 ersichtlich, werden von der Steuereinrichtung 3 die Drehzahlsignale 1a, 1b, 1c und 1d von den an den einzelnen Rädern angebrachten Drehzahlsensoren 1 aufgenommen. Außerdem werden Ausgangssignale 2a, 2b, 2c und 2d an die druckabsenkenden Bauteile 2 ausgegeben. Von dem Bremswertgeber 4 wird das Stellsignal 4a von der Steuereinrichtung 3 aufgenommen, um daraus einen Sollwert für die Stärke des Bremsvorganges zu ermitteln. Außerdem kann von der Steuereinrichtung noch eine oder mehrere der Größen:

- Signal 6, repräsentierend den Lenkradwinkel
- Signal 8, repräsentierend die Querbeschleunigung
- Signal 9a, repräsentierend die Gewichtslast auf das linke Vorderrad
- Signal 9b, repräsentierend die Gewichtslast auf das rechte Vorderrad
- Signal 9c, repräsentierend die Gewichtslast auf das linke Hinterrad
- Signal 9d, repräsentierend die Gewichtslast auf das rechte Hinterrad
- Signal 10, repräsentierend das Gesamtgewicht des Fahrzeuges
- Signal 11, repräsentierend die Verzögerung des Fahrzeuges
- Signal 12a, repräsentierend die Bremskraft an dem linken Vorderrad
- Signal 12b, repräsentierend die Bremskraft an dem rechten Vorderrad
- Signal 12c, repräsentierend die Bremskraft an dem linken Hinterrad
- Signal 12d, repräsentierend die Bremskraft an dem rechten Hinterrad
- Signal 13a, repräsentierend den Bremsdruck an dem linken Vorderrad
- Signal 13b, repräsentierend den Bremsdruck an dem rechten Vorderrad
- Signal 13c, repräsentierend den Bremsdruck an dem linken Hinterrad
- Signal 13d, repräsentierend den Bremsdruck an dem rechten Hinterrad

aufgenommen werden, um aus den ermittelten Werten des Radschlupfes Ausgangssignale zu generieren, die nach bestimmten Kriterien an die druckabsenkenden Bauteile 2 auszugeben sind, um ein festzulegendes Bremsverhalten zu erzielen. Es ist möglich, aus dem Lenkradwinkel und der aus den Drehzahlsignalen 1a-1d bestimmten Fahrzeuggeschwindigkeit die Querbeschleunigung zu bestimmen. Alternativ kann dies mit einem Querbeschleunigungssensor geschehen. Daraus kann eine bestimmte Einstellung des Radschlupfes an den einzelnen Rädern beim Durchfahren einer Kurve ermittelt werden. Die Signale 9a-9d können verwendet werden, um bei einer für jedes Rad einzeln bekannten Bremskraft $F_b$ den zugehörigen Bremskraftbeiwert für das entsprechende Rad zu bestimmen. Die Bremskraft $F_b$ wird beispielsweise an dem Bremssattel des entsprechenden Rades durch Dehnungsmeßstreifen bestimmt. Alternativ dazu kann der an jedem Rad wirkende Bremsdruck gemessen werden, der in einer guten Näherung der Bremskraft proportional ist. Außerdem ist es möglich, aus dem Gesamtgewicht des Fahrzeuges und der Fahrzeugverzögerung die resultierende Bremskraft $F_B$ zu bestimmen. Diese Bremskraft kann dann gleichmäßig auf alle Räder verteilt werden. Wenn ein ABS vorhanden ist, haben dessen Ansteuersignale an die druckabsenkenden Bauteile 2 Vorrang vor den Ausgangssignalen 2a-2d der Steuervorrichtung. Die Ansteuersignale eines ABS gehen vorzugsweise an dieselben druckabsenkenden Bauteile. Außerdem kann eine geeignete Kombination dieser Größen verwendet werden, um Aussagen zu treffen über eine eventuelle μ-split Bedingung verursacht durch unterschiedliche Haftung auf den verschiedenen Fahrzeugseiten zwischen den Rädern und der der Straßenoberfläche. Tritt eine solche μ-split Bedingung auf, wird dem Fahrzeugführer mittels

5

des Signals 20 eine geeignete Information ausgegeben. Eine andere Auswertung der Kombination dieser Größen kann ergeben, daß die Räder unterschiedliche Zustände aufweisen. Wenn diese unterschiedlichen Zustände festgestellt werden, wird dem Fahrzeugführer mittels des Signals 21 eine Information ausgegeben. In der Steuervorrichtung 3 ist außerdem ein $\mu/\sigma$ - Kennlinienfeld und ein $F_b/a_y$ Kennlinienfeld abgelegt, wobei letzteres die Generierung von Ausgangssignalen ermöglichen soll, die zu einer unterschiedlichen Kraftschlußausnutzung beim Durchfahren einer Kurve führen. Die Einstellung der höheren Bremskraft erfolgt dann auf der Kurveninnenseite, wenn das Fahrzeug beim Bremsen in die Kurve hinein gezogen werden soll. Die Kurvenfahrt wird mittels der Querbeschleunigung $a_y$ erkannt. Grundsätzlich wird diese Kennlinie noch von weiteren Faktoren beeinflußt.

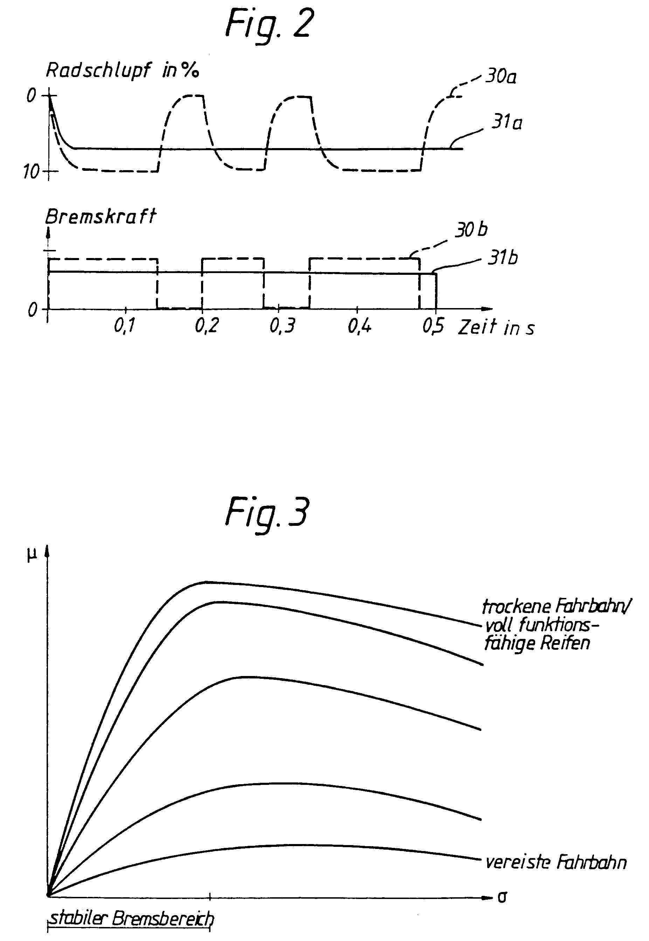

In Fig. 2 ist dargestellt, daß die zeitliche Unterbrechung des Bremsdruckes zu einem Verlauf der Bremskraft entsprechend der Kurve 30b führt. Dieser Verlauf der Bremskraft entspricht dem Verlauf der ununterbrochenen Bremskraft entsprechend Kurve 31b. Die Höhe der Maximalwerte der Kurven ergibt sich dabei aus der Bedingung, daß die Flächen unter den beiden Kurven gleich sein müssen, um dieselbe Bremskraft aufzubringen. Die entsprechend den Kurven 30b und 31b eingestellte Bremskraft führt zu einem zeitlichen Verlauf des Radschlupfes entsprechend den Kurven 30a bzw. 31a. Der Maximalwert der Kurve 30a entspricht dem Radschlupf 0%, d.h. der Drehzahl des frei laufenden Rades. Der minimale Wert des Radschlupfes von 10% entspricht dabei dem Radschlupf, der sich bei dem Maximalwert der beaufschlagten Bremskraft 30b einstellt. Die Kurve 31a entspricht dem Radschlupf, der sich bei einer kontinuierlichen Beaufschlagung der Bremskraft entsprechend Kurve 31b einstellt.

In Fig. 3 ist ein Kennlinienfeld des Bremskraftbeiwertes $\mu$ über dem Radschlupf $\sigma$ in Abhängigkeit der Haftung zwischen dem Rad und der Fahrbahnoberfläche aufgetragen. Der Bremskraftbeiwert $\mu$ entspricht dabei dem Beitrag $F_b$ eines Rades zur Gesamtbremskraft $F_B$ geteilt durch die Kraft, die sich aus dem Aufstandsgewicht $N_g$ des Fahrzeuges auf dieses Rad ergibt. Somit ist es möglich, aus den beiden grundsätzlich bekannten Werten $\mu$ und $\sigma$ auf die Haftung zwischen dem Rad und der Fahrbahnoberfläche zu schließen.

Ein Ausführungsbeispiel zur Bestimmung des Radschlupfes stellt sich folgendermaßen dar. Wenn ein Bremsvorgang eingeleitet wird, wird aus dem vom Bremswertgeber vorgegebenen Sollwert ermittelt, ob sich das Fahrzeug im stabilen Bremsbereich befindet, welcher in Fig. 3 dargestellt ist. Befindet sich das Fahrzeug in diesem stabilen Bremsbereich, wird die zeitabhängige Unterbrechung des Bremsdruckes eingeleitet. Dabei wird der Bremsdruck von den Rädern einer Achse vorteilhafter Weise gleichzeitig weggenommen, um Gierreaktionen des Fahrzeuges auszuschließen. Aus den Raddrehzahlen bei beaufschlagter Bremskraft und aus den Raddrehzahlen ohne anliegende Bremskraft wird für jedes Rad der Schlupf bestimmt. Mit diesen Werten des Radschlupfes wird aus der für jedes Rad ermittelten Bremskraft $F_b$ die Haftung zwischen dem entsprechenden Rad und der Fahrbahnoberfläche ermittelt. Wenn festgestellt wurde, daß die Räder verschiedener Fahrzeugseiten unterschiedliche Haftungen aufweisen, wird auf eine $\mu$-split Bedingung geschlossen. Dies wird dem Fahrzeugführer dann angezeigt. Das Erkennen dieser $\mu$-split Bedingung führt zu einer Kraftschlußausnutzung vergleichbar der Giermomentabschwächung durch zeitlich verzögerten Druckaufbau bei einem ABS. Der Bremsdruck wird dann so gesteuert, daß sich auf der Fahrzeugseite mit der besseren Haftung ein Radschlupf einstellt, der zu einer besseren Kraftschlußausnutzung auf dieser Fahrzeugseite gegenüber der anderen Fahrzeugseite führt. Diese Unterschiede in der Kraftschlußausnutzung werden mit einer solchen zeitlichen Verzögerung aufgebaut, daß dem Fahrzeugführer ausreichend Zeit bleibt, um eine möglicherweise auftretende Gierreaktion des Fahrzeuges auszugleichen.

**Patentansprüche**

**1.** Verfahren zur Bestimmung des Radschlupfes einzelner Räder eines Fahrzeuges, welche injektive, jeweils ein Maximum aufweisende Kennlinien des Bremskraftbeiwertes $\mu$ über dem Radschlupf $\sigma$ besitzen, die in Abhängigkeit der Haftung zwischen dem entsprechenden Rad und der Fahrbahnoberfläche variieren, indem während des Bremsens druckabsenkende Bauteile einzelner Räder zeitabhängig durch eine Steuervorrichtung, die in Abhängigkeit bestimmter Bedingungen Ausgangssignale erzeugt, so angesteuert werden, daß sich an diesen Rädern eine Drehzahl einstellen kann, die der Drehzahl des entsprechenden frei laufenden Rades entspricht und indem die Drehzahl jedes einzelnen Rades durch eine Sensoranordnung (1a-1d) gemessen wird, **dadurch gekennzeichnet,** daß die Ausgangssignale (2a-2d) der Steuervorrichtung (3) erzeugt werden, wenn die bestimmten Bedingungen dadurch gegeben sind, daß sich das Fahrzeug beim Bremsen in einem Bereich befindet, in dem die Kennlinien des Bremskraftbeiwertes $\mu$ über dem Radschlupf $\sigma$ eine positive Steigung besitzen,

daß die Ausgangssignale (2a-2d) an die druckabsenkenden Bauteile (2) bewirken, daß sich **jedes** der Räder während des Bremsvorganges zeitweise mit einer Drehzahl drehen kann, die gleich der Drehzahl des entsprechenden frei laufenden Rades ist und

daß aus den gemessenen Raddrehzahlen bei beaufschlagter Bremskraft und ohne anliegende Bremskraft für **jedes** Rad einzeln der Radschlupf bestimmt wird.

2. Verfahren nach Anspruch 1,
**dadurch gekennzeichnet,**
daß ein Bremsdruck - Sollwert aus der Stellung eines Bremswertgebers (4) der Bremsanlage ermittelt wird und daß die an den Rädern beaufschlagte, in Folge der Ansteuersignale taktweise unterbrochene Bremskraft (30b) integral über die Zeit des Bremsvorganges betrachtet gleich der integral über die Zeit des Bremsvorganges betrachtet kontinuierlich beaufschlagten Bremskraft (31b) aufgrund des vom Bremswertgeber (4) vorgegebenen Sollwertes ist.

3. Verfahren nach Anspruch 1 oder 2,
**dadurch gekennzeichnet,**
daß das Verlassen des Bereiches beim Bremsen, in dem die $\mu/\sigma$ - Kennlinien eine positive Steigung besitzen, dadurch erkannt wird,

daß eine aus gemessenen Raddrehzahlen bei beaufschlagter Bremskraft abgeleitete Radverzögerung mit mindestens einer Radverzögerungsschwelle verglichen wird und/oder

daß Ansteuersignale eines Anti-Blockier-Systems (ABS) zu den druckabsenkenden Bauteilen (2) auftreten.

4. Verfahren nach Anspruch 2,
**dadurch gekennzeichnet,**
daß das Verlassen des Bereiches beim Bremsen, in dem die $\mu/\sigma$ - Kennlinien eine positive Steigung besitzen, dadurch erkannt wird, daß der Bremsdruck - Sollwert mit mindestens einem vorgegebenen Schwellwert verglichen wird.

5. Verfahren nach einem der Ansprüche 1 bis 4,
**dadurch gekennzeichnet,**
daß die Zeitintervalle zwischen den Ansteuerungen der druckabsenkenden Bauteile während eines Bremsvorganges variiert werden.

6. Verfahren nach einem der Ansprüche 1 bis 5,
**dadurch gekennzeichnet,**
daß außer dem Radschlupf $\sigma$ noch aus der an jedem Rad gemessenen Bremskraft und Gewichtskraft der Bremskraftbeiwert $\mu$ bestimmt wird, aus welchem Wertepaar die entsprechende $\mu/\sigma$ -Kennlinie aus dem Kennlinienfeld bestimmt wird.

7. Verfahren nach Anspruch 6,
**dadurch gekennzeichnet,**
daß durch eine geeignete Mittelwertbildung über einen längeren Zeitraum unterschiedliche Zustände der einzelnen Räder aus ermittelten unterschiedlichen $\mu/\sigma$ - Kennlinien ermittelt werden.

8. Verfahren nach Anspruch 6 oder 7,
**dadurch gekennzeichnet,**
daß aus momentan ermittelten unterschiedlichen $\mu/\sigma$ -Kennlinien auf verschiedenen Fahrzeugseiten auf eine $\mu$-split Bedingung geschlossen wird.

9. Verfahren nach einem der Ansprüche 1 bis 8,
**dadurch gekennzeichnet,**
daß aus den gemessenen Werten des Radschlupfes $\sigma$ der einzelnen Räder der Bremsdruck an den Rädern so gesteuert wird, daß sich an den einzelnen Rädern ein Radschlupf einstellt, der zu einer bestimmten Charakteristik der Kraftschlußausnutzung führt.

**10.** Verfahren nach einem der Ansprüche 1 bis 9,
**dadurch gekennzeichnet,**
daß aus den gemessenen Werten des Radschlupfes σ der einzelnen Räder der Bremsdruck an den Rädern so gesteuert wird, daß sich an den einzelnen Rädern ein Radschlupf einstellt, der bei einer erkannten Kurvenfahrt zu einer bestimmten Lenkcharakteristik führt.

**11.** Verfahren nach Anspruch 10,
**dadurch gekennzeichnet,**
daß die Einstellung einer bestimmten Lenkcharakteristik aus einem Kennfeld erfolgt, in dem die Werte für eine Verteilung des Bremsdruckes in Abhängigkeit von einem oder mehreren der Parameter Querbeschleunigung, μ-Wert, Fahrzeuggeschwindigkeit, Sollwert für die zu beaufschlagende Bremskraft abgelegt sind.

**12.** Verfahren nach einem der Ansprüche 1 bis 11,
**dadurch gekennzeichnet,**
daß aus den gemessenen Werten des Radschlupfes σ der einzelnen Räder der Bremsdruck an den Räder so gesteuert wird, daß sich an den einzelnen Rädern ein Radschlupf einstellt, der zu einer gleichmäßigen Abnutzung der Bremsbeläge führt.

## Claims

**1.** Process for determining the wheel slip of individual wheels of a vehicle which possess injective characteristics of the braking force coefficient μ against the wheel slip σ which each have a maximum and which vary as a function of the grip between the corresponding wheel and the road surface, by activating, during braking, pressure-reducing components of individual wheels as a function of time by means of a control device which generates output signals as a function of specific conditions, in such a way that a speed which corresponds to the speed of the corresponding free-running wheel can be set on these wheels, and by measuring the speed of each individual wheel by means of a sensor arrangement (1a-1d), characterized in that the output signals (2a-2d) of the control device (3) are generated when the specific conditions are provided due to the fact that, during braking, the vehicle is in a range in which the characteristics of the braking force coefficient μ against the wheel slip σ possess a positive gradient, in that the output signals (2a-2d) transmitted to the pressure-reducing components (2) ensure that, during the braking operation, each of the wheels can rotate temporarily at a speed which is equal to the speed of the corresponding free-running wheel, and in that the wheel slip is determined individually for each wheel from the measured wheel speeds, with braking force applied and without braking force applied.

**2.** Process according to Claim 1, characterized in that a desired brake-pressure value is determined from the position of a brake-value transmitter (4) of the brake system, and in that the braking force (30b) applied to the wheels and intermittently interrupted as a result of the activating signals is, considered integrally over the time of the braking operation, equal to the continuously applied braking force (31b), considered integrally over the time of the braking operation, on the basis of the desired value predetermined by the brake-value transmitter (4).

**3.** Process according to Claim 1 or 2, characterized in that the leaving of the range during braking in which the μ/σ-characteristics possess a possible gradient is detected by comparing a wheel deceleration derived from measured wheel speeds with braking force applied with at least one wheel-deceleration threshold and/or by sending activating signals of an anti-lock system (ABS) to the pressure-reducing components (2).

**4.** Process according to Claim 2, characterized in that the leaving of the range during braking in which the μ/σ-characteristics possess a positive gradient is detected by comparing the desired brake-pressure value with at least one predetermined threshold value.

**5.** Process according to one of Claims 1 to 4, characterized in that the time intervals between the activations of the pressure-reducing components during a braking operation are varied.

8

**6.** Process according to one of Claims 1 to 5, characterized in that not only the wheel slip $\sigma$ but also the braking force coefficient $\mu$ is determined from the braking force and the gravitational force measured on each wheel, corresponding $\mu/\sigma$-characteristic of the family of characteristics being determined from this pair of values.

**7.** Process according to Claim 6, characterized in that by suitable averaging over a relatively long period of time different states of the individual wheels are determined from different $\mu/\sigma$-characteristics determined.

**8.** Process according to Claim 6 or 7, characterized in that a $\mu$-split condition is concluded from instantaneously determined different $\mu/\sigma$-characteristics on different sides of the vehicle.

**9.** Process according to one of Claims 1 to 8, characterized in that, from the measured values of the wheel slip $\sigma$ of the individual wheels, the brake pressure on the wheels is controlled in such a way as to establish on the individual wheels a wheel slip which leads to a specific characteristic of adhesion utilization.

**10.** Process according to one of Claims 1 to 9, characterized in that, from the measured values of the wheel slip $\sigma$ of the individual wheels, the brake pressure on the wheels is controlled in such a way as to establish on the individual wheels a wheel slip which leads to a specific steering characteristic during detected cornering.

**11.** Process according to Claim 10, characterized in that a specific steering characteristic is established from a family of characteristics in which are filed the values for a distribution of the brake pressure as a function of one or more of the parameters of transverse acceleration $\mu$-value, vehicle speed and desired value for the braking force to be applied.

**12.** Process according to one of Claims 1 to 11, characterized in that, from the measured values of the wheel slip $\sigma$ of the individual wheels, the brake pressure on the wheels is controlled so as to establish on the individual wheels a wheel slip which leads to a uniform wear of the brake linings.

**Revendications**

**1.** Procédé pour déterminer le glissement de roue de différentes roues d'un véhicule, possédant des caractéristiques injectives, présentant chacune un maximum, du coefficient de force de freinage ou coefficient d'adhérence $\mu$ en fonction du glissement de roue $\sigma$, qui varient en fonction de l'adhérence entre la roue concernée et la surface de la chaussée,
selon lequel, pendant le freinage, des composants réducteurs de pression de différentes roues sont commandés en fonction du temps par un dispositif de commande qui génère des signaux de sortie en fonction de conditions déterminées, de manière que puisse s'établir, sur ces roues, une vitesse de rotation qui correspond à la vitesse de rotation de la roue correspondante roulant librement,
et selon lequel la vitesse de rotation de chaque roue est mesurée par un dispositif capteur (1a - 1d), caractérisé en ce
que les signaux de sortie (2a - 2d) du dispositif de commande (3) sont générés lorsque les conditions déterminées sont satisfaites en raison du fait què le véhicule se trouve au freinage dans une zone où les caractéristiques du coefficient d'adhérence $\mu$ en fonction du glissement de roue a possèdent une pente positive,
que les signaux de sortie (2a - 2d) ont pour effet, sur les composants réducteurs de pression (2), que chacune des roues peut tourner temporairement, pendant le freinage, à une vitesse de rotation égale à la vitesse de rotation de la roue correspondante roulant librement et
que le glissement de roue est déterminé, individuellement pour chaque roue, à partir des vitesses de rotation de roue mesurées pendant l'application de la force de freinage et sans application de la force de freinage.

**2.** Procédé selon la revendication 1, caractérisé en ce qu'une valeur de consigne pour la pression de freinage est établie à partir de la position d'un générateur de valeur de freinage (4) du système de freinage et
que la force de freinage (30b) appliquée aux roues, mais interrompue de façon rythmée par suite des signaux de commande, est égale, considérée sous sa forme intégrée sur la durée du freinage, à la force de freinage (31b) appliquée de façon continue sur la base de la valeur de consigne préfixée par le générateur de valeur de freinage (4), également considérée sous sa forme intégrée sur la durée du freinage.

**3.** Procédé selon la revendication 1 ou 2, caractérisé en ce que la sortie, pendant le freinage, de la zone dans laquelle les caractéristiques $\mu/\sigma$ possèdent une pente positive, est détectée

par la comparaison d'une décélération de roue, dérivée à partir de vitesses de rotation de roue mesurées pendant l'application de la force de freinage, avec au moins un seuil de décélération de roue et/ou

par l'application de signaux de commande d'un système antiblocage (ABS) aux composants réducteurs de pression (2).

**4.** Procédé selon la revendication 2, caractérisé en ce que la sortie, pendant le freinage, de la zone dans laquelle les caractéristiques $\mu/\sigma$ possèdent une pente positive, est détectée par la comparaison de la valeur de consigne de la pression de freinage avec au moins un seuil préfixé.

**5.** Procédé selon une des revendications 1 à 4, caractérisé en ce que les intervalles de temps entre les commandes des composants réducteurs de pression sont variés pendant un freinage.

**6.** Procédé selon une des revendications 1 à 5, caractérisé en ce que, outre le glissement de roue $\sigma$, il comprend aussi la détermination, à partir de la force de freinage mesurée sur chaque roue et du poids reposant sur chaque roue, du coefficient d'adhérence $\mu$, la paire de valeurs ainsi obtenues servant à établir la caractéristique $\mu/\sigma$ correspondante du réseau de caractéristiques.

**7.** Procédé selon la revendication 6, caractérisé en ce que, par une formation adéquate d'une valeur moyenne sur un laps de temps relativement long, différents états des roues individuelles sont déterminés à partir de différentes caractéristiques $\mu/\sigma$ établies.

**8.** Procédé selon la revendication 6 ou 7, caractérisé en ce que l'établissement de caractéristiques $\mu/\sigma$ instantanées différentes pour différents côtés du véhicule conduit à la conclusion que le véhicule roule sur une chaussée dissymétrique pour ce qui concerne la valeur de $\mu$.

**9.** Procédé selon une des revendications 1 à 8, caractérisé en ce que, sur la base des valeurs mesurées du glissement de roue $\sigma$ des différentes roues, la pression de freinage sur les roues est réglée de manière que s'établisse, sur les différentes roues, un glissement de roue conduisant à une caractéristique déterminée de l'exploitation de l'aptitude à la transmission de forces.

**10.** Procédé selon une des revendications 1 à 9, caractérisé en ce que, sur la base des valeurs mesurées du glissement de roue $\sigma$ des différentes roues, la pression de freinage sur les roues est réglée de manière que s'établisse, sur les différentes roues, un glissement de roue qui conduit, lors du passage par un virage détecté en tant que tel, à une caractéristique de direction déterminée.

**11.** Procédé selon la revendication 10, caractérisé en ce que l'établissement d'une caractéristique de direction déterminée s'effectue à partir d'un champ caractéristique dans lequel sont contenues les valeurs pour une répartition de la pression de freinage en fonction d'un ou plusieurs des paramètres que sont l'accélération transversale, la valeur de $\mu$, la vitesse du véhicule et la valeur de consigne pour la force de freinage à appliquer.

**12.** Procédé selon une des revendications 1 à 11, caractérisé en ce que, sur la base des valeurs mesurées du glissement de roue $\sigma$ des différentes roues, la pression de freinage sur les roues est réglée de manière que s'établisse, sur les différentes roues, un glissement de roue qui conduit à une usure régulière des garnitures de frein.

# Fig.1

EP 0 393 375 B1

## Fig. 2

Radschlupf in %

30a

31a

0

10

Bremskraft

30 b

31b

0    0,1    0,2    0,3    0,4    0,5  Zeit in s

## Fig. 3

μ

trockene Fahrbahn/
voll funktionsfähige Reifen

vereiste Fahrbahn

σ

stabiler Bremsbereich